# EUROPÄISCHE PATENTANMELDUNG

(11) **EP 1 016 563 A2**
(43) Veröffentlichungstag der Anmeldung: **05.07.2000**
(21) Anmeldenummer: 99125491.3
(22) Anmeldetag: 21.12.1999
(51) Int. Cl.: B60N 2/42

(54) **Sicherheitseinrichtung für Kraftfahrzeuge**

(30) Priorität: 28.12.1998 AT 217098
(71) Anmelder: Brunnhofer, Klaus, Dr., 8010 Graz (AT)
(72) Erfinder: Brunnhofer, Klaus, Dr., 8010 Graz (AT)
(74) Vertreter: Vinazzer, Edith, Dipl.-Ing.

(57) **Zusammenfassung**

Die Erfindung befasst sich mit einer Sicherheitseinrichtung für Kraftfahrzeuge mit einer insbesondere sämtliche für die Fahrzeuginsassen vorgesehene Sitze aufnehmenden Sicherheitskapsel. Diese ist unter Ausnützung ihrer Massenträgheit bei einem zumindest im Wesentlichen frontal erfolgenden Zusammenstoß um eine in Fahrzeugquerrichtung verlaufende Achse schwenkbar und vorzugsweise bei einem Seitenaufprall in seitlicher Richtung gleitbeweglich verschiebbar. Die Sicherheitskapsel (1) ist dabei am Fahrzeug derart schwenkbar angeordnet, dass sie bei einem Frontalzusammenstoß mit einem Hindernis gegenüber diesem oder über dieses ausschwingt.

## Beschreibung

Die gegenständliche Erfindung betrifft eine Sicherheitseinrichtung für Kraftfahrzeuge mit einer insbesondere sämtliche für die Fahrzeuginsassen vorgesehenen Sitze aufnehmenden Sicherheitskapsel, die unter Ausnützung ihrer Massenträgheit bei einem zumindest im Wesentlichen frontal erfolgenden Zusammenstoß um eine in Fahrzeugquerrichtung verlaufende Achse verschwenkbar und ggf. bei einem Seitenaufprall in seitlicher Richtung gleitbeweglich verschiebbar ist.

Die am häufigsten vorkommenden und für die Insassen eines Kraftfahrzeuges mit vergleichsweisen schweren Verletzungen verbundenen Unfälle sind Frontalkollisionen und seitliche Kollisionen. Die üblicherweise in Kraftfahrzeugen eingesetzten passiven Sicherheitssysteme, wie Sicherheitsgurte, Airbag und Kopfstützen sowie bei neueren Fahrzeugen auch Seitenairbags haben sich durchaus als sehr nützlich erwiesen, um die Schwere von Verletzungen herabzusetzen oder Verletzungen überhaupt zu verhindern. Nichtsdestotrotz sind die von diesen Sicherheitssystemen nicht unmittelbar erfassten Körperpartien und Gliedmassen von Fahrzeuginsassen, insbesondere durch starke Beschleunigungs- und Verzögerungskräfte nach wie vor verletzungsanfällig. Verursacher solcher Verletzungen, die sowohl an äußeren als auch an inneren Organen sein können, sind oft örtlich hohe Flächenpressungen an jenen Stellen, wo sich der Körper des Fahrzeuginsassen zwangsweise abstützt. Daraus resultiert die schon seit längerem bekannte Erkenntnis, dass eine grundlegende und vor Verletzungen schützende Maßnahme bei höheren Unfallgeschwindigkeiten die ist, die Fahrzeuginsassen rechtzeitig in eine Position zu bringen, in der die physikalisch bedingten und unvermeidbaren Beschleunigungs- bzw. Verzögerungskräfte möglichst geringe verletzende Auswirkungen haben können.

Von dieser Erkenntnis ausgehend ist bereits, beispielsweise in der DE 43 37 019 A1, vorgeschlagen worden, eine insbesondere kugelig ausgeführte und zumindest einen bewegbaren Schalensitz für den Fahrzeuginsassen aufweisende Fahrgastzelle vorzusehen, die derart am Kraftfahrzeug angeordnet bzw. gelagert ist, dass sie um eine durch den Kugelmittelpunkt gehende Querachse und um eine durch den Kugelmittelpunkt verlaufende Längsachse drehbar ist. Die Fahrgastzelle beinhaltet außer dem Fahrersitz die zur Fahrtausführung notwendigen Einrichtungen, wie Armaturenbrett, Lenkrad und Fußpedalplatte. Diese müssen so ausgerichtet sein, dass sie sich von der Karosserie beim Schwenken der Fahrgastzelle trennen. Bei einem Frontalcrash mit einer spontanen Verzögerung in Längsrichtung wird durch die Massenwirkung der Fahrgastzelle eine Drehung derselben um die querverlaufende Drehachse bewirkt, wodurch die im Schalensitz befindliche Person in eine für sie günstige Position gebracht wird, in der der anteilsmäßig größte Abbau der kinetischen Energie abläuft. Bei einer Seitenkollision wird der auf den Fahrzeugrahmen wirkende Stoßimpuls auf die Fahrgastzelle übertragen, durch deren Massenträgheit ein Drehen um die Längsrichtung verlaufende Drehachse bewirkt wird. Zusätzlich kann vorgesehen werden, die Fahrgastzelle seitlich beweglich anzuordnen. Mit dieser Erfindung soll es daher möglich sein, den Körper des Fahrzeuginsassen sowohl bei einem Frontalzusammenstoß als auch bei einem seitlichen Aufprall in eine Position zu bringen, die für die Abstützung der eigenen Massenkraft des Fahrzeuginsassen sehr günstig ist. Bei einer praktischen Umsetzung dieser bekannten Sicherheitseinrichtung dürften jedoch insbesondere zwei Probleme zu erwarten sein, an denen eine tatsächliche Realisierung voraussichtlich scheitern würde. Moderne Kraftfahrzeuge, insbesondere PKW, besitzen eine möglichst kompakte und gewichtssparende Konstruktion. Zumindest bei einem Frontalzusammenstoß würde bei dieser bekannten Einrichtung der Fahrzeuginsasse zwar bezüglich der auftretenden Kräfte entlastet, er würde jedoch nicht aus dem Gefahrenbereich gebracht werden. Die Sicherheitszelle müsste daher ausgesprochen stabil und vor Beschädigungen geschützt gefertigt werden. Darüber hinaus ist der Raumbedarf einer Kapsel für die vorgesehen Drehbewegungen, und zwar sowohl bei einem Seitenaufprall als auch bei einem Frontalzusammenstoß, wesentlich größer als der Raum, der in einem normalen Kraftfahrzeug, welches für mehr als eine Person gedacht ist, zur Verfügung steht. Selbst für Fahrzeuge, die nur für eine Person gedacht wären, wäre der Raumbedarf nicht unerheblich.

Es ist ferner bekannt, in Kraftfahrzeugen vorzusehen, die beiden Sitze der Vorder- und der Rücksitzbank mittels je einer Querführungsanordnung für den Fall eines Aufpralls seitlich verschiebbar auszustatten. Eine derartige Anordnung ist beispielsweise aus der DE 195 16 013 A1 bekannt. Hier ist vorgesehen, die beiden nebeneinander angeordneten Fahrzeugsitze jeweils auf zwei Längsschienen verschiebbar zu halten und für jeden Fahrzeugsitz zwei Querschienen vorzusehen, die an den an den Längsschienen gehaltenen Querführungen zu beiden Fahrzeugseiten linear geführt sind. Die Arretierung erfolgt mittels Scherbolzen, die bei Belastungen auf die Querschienen in der Höhe eines Seitenaufpralles abscheren. Diese bekannte Anordnung bietet jedoch keinerlei Schutz bei einem Frontalzusammenstoß und bietet auch bei einem Seitenaufprall nicht den Schutz, den die aus dem Stand der Technik bekannte und oben beschriebene querverschiebliche Sicherheitszelle bieten würde.

Darüber hinaus ist es schon seit längerem aus der Patentliteratur bekannt, Sitze in Kraftfahrzeugen, die mit Sicherheitsgurten versehen sind, an quer zur Fahrtrichtung verlaufenden Achsen schwenkbar zu lagern. Auch bei solchen Anordnungen wird im Fall des Frontalzusammenstoßes der Sitz um seine Achse durch Einwirkung der Massenträgheit in Fahrtrichtung verschwenkt. Der angeschnallte Insasse wird dann gegen die etwa senkrecht zur Fahrtrichtung verlaufende Sitzebene gedrückt, die dabei wenigsten einen Teil der kinetischen Energie des Fahrzeuginsassen aufnimmt. Dies verringert die Belastung durch den Gurt. Eine derartige Anordnung ist beispielsweise aus der deutschen Offenlegungsschrift Nr. 23 33 498 bekannt.

Die Erfindung hat sich nun die Aufgabe gestellt, eine als Sicherheitskapsel und damit als geschlossene Fahrgastzelle ausgebildete Sicherheitseinrichtung für Kraftfahrzeuge vorzuschlagen, die in ein Serienfahrzeug, insbesondere in Personenkraftwagen, vergleichsweise einfach zu integrieren ist und dabei so angeordnet wird, dass sie den Fahrzeuginsassen vor allem bei einem Frontalzusammenstoß vor Verletzungen jeder Art möglichst guten Schutz bietet.

Gelöst wird die gestellte Aufgabe erfindungsgemäß dadurch, dass die Sicherheitskapsel am Fahrzeug derart schwenkbar angeordnet ist, dass sie bei einem Frontalzusammenstoß mit einem Hindernis gegenüber diesem oder über dieses ausschwingt.

Die erfindungsgemäße Sicherheitskapsel weicht daher dem Kollisionspartner aus und bringt die Fahrzeuginsassen aus dem unmittelbaren Gefahrenbereich. Dabei werden die Fahrzeuginsassen gleichzeitig bezüglich der auftretenden Kräfte entlastet.

Gemäß einer bevorzugten Ausführungsvariante der Erfindung ist die Sicherheitskapsel an ihrem rückwärtigen und oberen Bereich an der fahrzeugfesten Schwenkachse gelagert, welche auch zum gleitbeweglichen Verschieben der Sicherheitskapsel bei einem Seitenaufprall als "Schiebegelenk" Verwendung finden kann. Diese Anordnung ist einerseits für das erfindungsgemäße Ausschwingen besonders günstig und gestattet andererseits, die Sicherheitskapsel vom Fahrzeugaufbau her sehr gut in das Fahrzeug zu integrieren.

Wie erwähnt, gestattet die Lage der Schwenkachse eine sehr gute Integration der Sicherheitskapsel in das Fahrzeug. Diese kann somit als vormontierter Fahrzeugteil mit Fahrzeugtüren, insbesondere sämtlichen Sitzen, mit Windschutzscheibe und Fahrzeugdach, jeweils in dem dem betreffenden Fahrzeug angepassten Design ausgeführt werden.

Der konstruktive Aufwand zur Lagerung der Sicherheitskapsel an jenem Teil des Fahrzeuges, welcher nicht der Sicherheitskapsel angehört, wird dadurch einfach gehalten, dass die Sicherheitskapsel mittels Schwing- und gleichzeitig Schiebegelenken an der insbesondere mit der Bodenplatte des Fahrzeuges fest in Verbindung stehenden Schwenkachse gelagert wird. Um die Verbindung dieser Schwing- und Schiebegelenke in einer ausreichend stabilen Weise durchzuführen, wird vorgesehen, dass diese Schwing- und Schiebegelenke Teile eines Schlittens der Sicherheitskapsel sind.

Ein konstruktiv einfacher und gleichzeitug stabiler Aufbau wird dann unterstützt, wenn eine mit der Bodenplatte des Fahrzeuges verbundene Tragevorrichtung vorgesehen ist, die Rahmenteile aufweist, auf welchen eine die Schwenkachse bildende Stange oder dergleichen angeordnet ist.

Im Falle eines Seitenaufpralls soll eine leichte gleitbewegliche Verschiebung der Sicherheitskapsel möglich sein. Dazu wird neben den Schiebegelenken zumindest eine, insbesondere werden zwei, mit der Bodenplatte des Fahrzeuges fest verbundene, quer verlaufende Führungsschiene(n) vorgesehen.

Die Verbindung des Schlittens zur Führungsschiene und gleichzeitig eine Festlegung des Schlittens an der Bodenplatte des Fahrzeuges erfolgen zweckmäßigerweise über Scherbolzen oder dergleichen, die die Führungsschiene durchsetzen und an der Tragevorrichtung beziehungsweise der Bodenplatte des Fahrzeuges befestigt sind. Durch das Vorsehen von Scherbolzen, die somit Sollbruchstellen besitzen, ist sichergestellt, dass im Falle eines Frontal- oder Seitenaufpralls die Verbindung der Sicherheitskapsel zum Fahrzeug aufgehoben wird.

Um auch beim Ausschwingen der Sicherheitskapsel eine gewisse Führung derselben, zumindest in der ersten Phase des Ausschwingens, zu gewährleisten, ist vorgesehen, dass die Bolzen die Führungsschiene an Kreuzungsstellen mit Längsschienen durchsetzen.

Besonders vorteilhaft ist eine Ausführung der Sicherheitskapsel, bei der zumindest die Sitze einer Sitzreihe bei einem Ausschwingen der Sicherheitskapsel um einen größeren Winkel schwenken als die Sicherheitskapsel selbst.

Dies kann beispielsweise in einfacher Weise mittels Seilen durchgeführt werden, die einerends an der Sicherheitskapsel und anderends am Sitz beziehungsweise der Sitzreihe befestigt sind. Zusätzlich werden diese Seile entsprechend umgelenkt, um das zusätzliche Verschwenken der Sitze beziehungsweise der Sitzreihen durchzuführen. Dazu werden zumindest zwei Umlenkrollen vorgesehen, von welchen die eine am Fahrzeug und die andere an der Kapsel befestigt ist.

Je nach der Lage der gesonderten Schwenkache für die Sitze beziehungsweise für die Sitzreihen ergibt sich ein unterschiedlicher Raumbedarf für diese zusätzliche Verschwenkbewegung. So ist beispielsweise eine geringer Raumbedarf bei einer Lage der Schwenkachse im mittleren Bereich oder im unteren Bereich der Sitzlehne gegeben.

Die gegenständliche Erfindung betrifft auch ein Fahrzeug, welches mit einer erfindungsgemäß ausgeführten Sicherheitseinrichtung ausgestattet ist. Dieses Fahrzeug ist bevorzugt ein Personenkraftwagen.

Weitere Merkmale, Vorteile und Einzelheiten der Erfindung werden nun anhand der Zeichnung, die mehrere Ausführungsbeispiele darstellt, näher beschrieben. Sämtliche Zeichnungsfiguren sind dabei schematische und nicht maßstabsgetreu ausgeführte Darstellungen. Dabei zeigen
Fig. 1 die schematischen Umrisse eines PKW in Seitenansicht mit einer erfindungsgemäßen Sicherheitskapsel,
Fig. 2 eine Schrägansicht der Umrisse eines PKW mit einer erfindungsgemäß ausgeführten Sicherheitskapsel,
Fig. 3 eine Schrägansicht auf eine mögliche Ausführungsform des Unterbaus der Sicherheitskapsel,
Fig. 4 in Schrägansicht ein Detail einer Führungsschiene,
Fig. 5 die Umrisse eines PKW in Seitenansicht mit einer weiteren Ausführungsvariante einer Sicherheitskapsel und
Fig. 6a, 6b und 6c Prinzipskizzen unterschiedlicher Varianten von in einer erfindungsgemäßen Sicherheitskapsel verwendbaren Sicherheitssitzen.

Der Grundgedanke der gegenständlichen Erfindung besteht in einer Zweiteilung des Fahrzeuges, und zwar einerseits in insbesondere eine einzige Sicherheitskapsel und andererseits in das Fahrgestell mit den verbleibenden Fahrzeugkomponenten. Bevorzugt ist dabei eine Ausführung, bei der eine einzige Sicherheitskapsel vorgesehen ist, die, soferne es sich um einen PKW handelt, sowohl die Vordersitze als auch die Rücksitze aufnimmt.

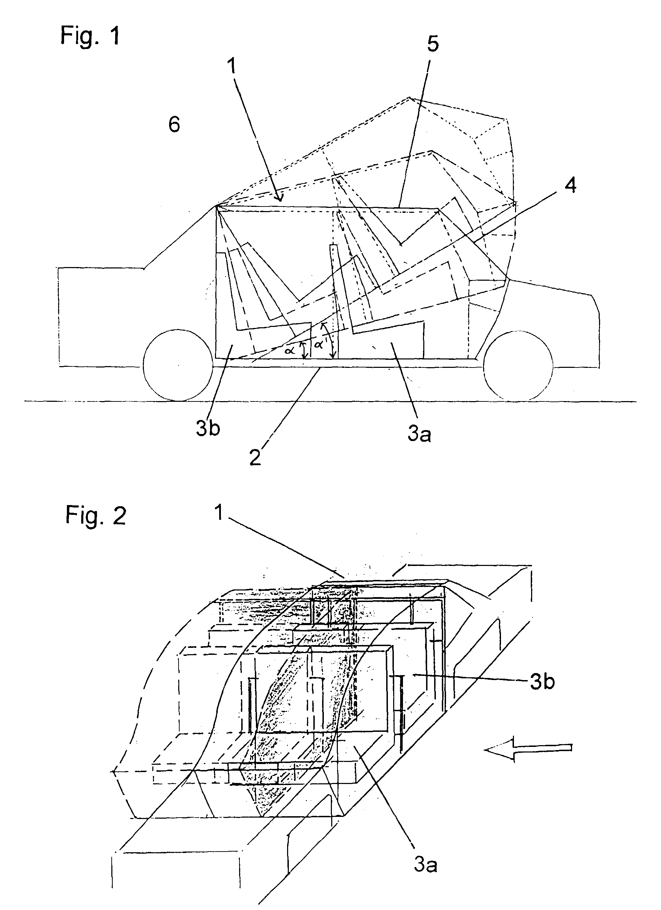

Die Sicherheitskapsel 1 gemäß den Fig. 1 und 2 nimmt sowohl die Vorder- als auch die Rücksitze 3a, 3b auf und besteht aus einem Grundgerüst in Monocoque-Konstruktion, welches mit einigen Fahrzeugteilen, wie Türen, Armaturenbrett mit Armaturen, Windschutzscheibe 4, Wagendach 5 usw. vormontiert wird und bei der Montage des Fahrzeuges über eine Tragevorrichtung, auf deren Ausgestaltung später noch eingegangen wird, auf die Bodenplatte 2 des Fahrzeuges aufgesetzt wird.

Außerhalb der Sicherheitskapsel 1 verbleiben das Fahrgestell mit Motor und den ihn umgebenden Karosserie- und sonstigen Bauteilen des Fahrzeuges, der Antriebsstrang, der Treibstofftank und der Kofferraum, ebenfalls mit den ihn umgebenden Karosserie- und Fahrzeugteilen.

Die grundsätzliche Funktionsweise der Sicherheitskapsel 1 ist aus den Figuren 1 und 2 ersichtlich. Dabei bestehen die beiden Grundfunktionen der Sicherheitskapsel 1 darin, bei Fahrzeugunfällen in den beiden Hauptrichtungen - Frontalzusammenstoß mit einem anderen Fahrzeug oder einem festen Hindernis und seitlicher Anprall - die Sicherheitskapsel 1 mitsamt den Fahrzeuginsassen aus dem unmittelbaren Gefahrenbereich zu bringen.

Wie Fig. 1 zeigt, soll die Sicherheitskapsel 1 bei einem Frontalzusammenstoß mit einem anderen Fahrzeug oder einem festen Hindernis über diesen Unfallgegner aus- bzw. hochschwingen und derart die Fahrzeuginsassen aus dem unmittelbaren Gefahrenbereich entfernt werden. Bei einem seitlichen Anprall soll, wie Fig. 2 schematisch zeigt, sichergestellt sein, dass eine seitliche Verschiebung der Sicherheitskapsel 1 stattfindet und somit die Fahrzeuginsassen ebenfalls aus dem Gefahrenbereich, wo Verletzungen auftreten können, entfernt werden.

Als Auslöser für das Ausweichen durch Hoch- bzw. Ausschwingen der Sicherheitskapsel 1 wird ihre Masse bzw. Trägheit und auch die der diese benützenden Person bzw. Personen in Fahrtrichtung relativ zum plötzlich abgestoppten Fahrzeug ausgenützt. Dabei können zusätzliche Vorrichtungen vorgesehen werden, die das Ausschwingen der Sicherheitskapsel 1 unmittelbar nach dem Zusammenstoß unterstützen. Die auf diese Weise zusätzlich auf die Sicherheitskapsel 1 und die Insassen wirkende Kraft reduziert für jeden Insassen den Geschwindigkeitsunterschied zwischen dem über die Sicherheitsgurte mit dem Sitz verbundenen Körper und dem relativ frei beweglichen Kopf des Fahrzeuginsassen. Daraus resultiert eine Verminderung von Kopf- und Wirbelsäulenverletzungen.

Wie Fig. 2 schematisch zeigt, ist die Sicherheitskapsel 1 seitlich, und zwar in beide Richtungen, gleitbeweglich geführt, so dass bei einem seitlichen Anprall die äußere, seitliche Kraft, die im Allgemeinen durch einen Zusammenstoß mit einem zweiten Fahrzeug zu Stande kommt, eine Verschiebung und ein geführtes Gleiten der Sicherheitskapsel 1 aus dem unmittelbaren Gefahrenbereich bewirkt. In Fig. 2 ist dabei die seitlich verschobene Position strichliert eingezeichnet.

Fig. 1 zeigt die Sicherheitskapsel 1 in drei unterschiedlichen Lagen. Diese Lagen sind die am Fahrzeug festgelegte Lage und zwei verschwenkte Lagen, die strichliert eingezeichnet sind, nämlich eine, bei der die Sicherheitskapsel 1 um einen Winkel α von 15° und eine, bei der die Kapsel 1 um einen Winkel α' von 30° ausgeschwenkt ist. Die Schwenkachse 6 für die Sicherheitskapsel 1 befindet sich im Bereich des rückwärtigen oberen Endes der Sicherheitskapsel 1. Dabei bildet die Achse 6 gleichzeitig die Stelle, wo die Sicherheitskapsel 1 für ein seitliches Gleiten gelagert ist. Die Lage der Achse 6 stimmt zumindest in Wesentlichen mit jener Stelle überein, wo sich der hintere Endbereich des Wagendaches befindet und der Übergang zur Heckscheibe erfolgt.

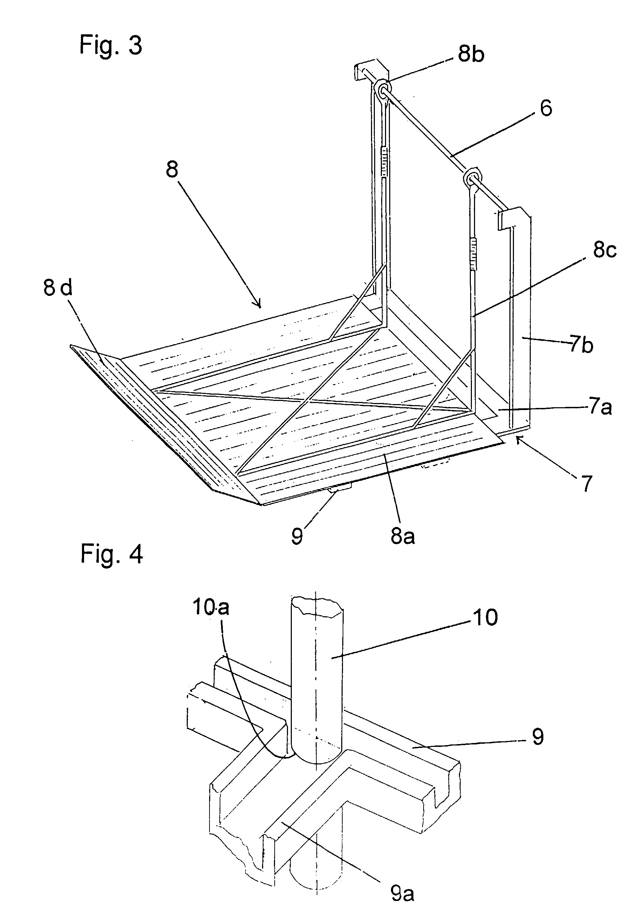

Von der prinzipiellen Ausführung wird bevorzugt vorgesehen, dass die Sicherheitskapsel 1 mittels Schwinggelenken 8b, die gleichzeitig auch eine Verschiebefunktion besitzen, an der fahrzeugfesten Achse 6 gelagert ist. Fig. 3 zeigt die diesbezügliche Ausgestaltung. Dabei ist eine mit der Bodenplatte des Fahrzeuges verbundene Tragevorrichtung 7 vorgesehen. Die Tragevorrichtung 7 umfasst einen Unterteil 7a und zwei seitliche Rahmenteile 7b, deren obere Endbereiche durch eine die Achse 6 bildende Trägerstange verbunden sind. Die in Fig. 3 ansonsten nicht dargestellte Sicherheitskapsel 1 umfasst einen Schlitten 8, welcher eine Grundplatte 8a und an deren rückwärtigen Endbereich angeordnete Träger 8c, die hier stangenartig ausgebildet sind, aufweist. An den oberen, freien Endbereichen der Träger 8c, die von der Grundplatte 8a rechtwinkelig abragen, sind die Schwing- und Schiebegelenke 8b vorgesehen, die auf der Achse 6 sitzen und somit einerseits das Schwinggelenk zum Ausschwingen des Schlittens 8 und andererseits die Verschiebeeinrichtung zum gleitbeweglichen seitlichen Verschieben des Schlittens 8 gegenüber der Bodenplatte 2 bilden.

Der Schlitten 8 wird ferner vorzugsweise so ausgeführt, dass seine Vorderpartie 8d leicht schräg angehoben verläuft, um im Falle eines Frontalzusammenstoßes eine das Ausschwingen begünstigende zusätzliche Kraftkomponente zu erhalten.

Die Festlegung des Teil der Sicherheitskapsel 1 bildenden Schlittens 8 auf der Tragevorrichtung 7 des Fahrzeuges erfolgt grundsätzlich durch das Eigengewicht der Sicherheitskapsel 1 und kann zusätzlich durch eine Anzahl von Bolzen 10, die in zumindest eine Führungsschiene 9, hier sind es zwei Führungsschienen 9, eingreifen, diese durchsetzen und mit diesen zusammenwirken, erfolgen. Die Führungsschienen 9 sind am Unterteil 7a der Tragevorrichtung 7 befestigt. Die Schienen 9 verlaufen in Fahrzeugquerrichtung und insbesondere im Wesentlichen über die Breite der Bodenplatte 2. Bevorzugt werden zwei Führungsschienen 9 vorgesehen, von welchen die eine unterhalb der Vordersitze und die andere unterhalb der Rücksitze angeordnet ist. Der Schlitten 8 ist pro Führungsschiene 9 über zumindest zwei Bolzen 10 mit der Tragevorrichtung 7 bzw. der Bodenplatte 2 verbunden. Wie Fig. 4 zeigt durchsetzen die Bolzen 10 die Führungsschiene 9 an T-förmigen Kreuzungsstellen mit Längsschienen 9a, die über eine gewisse Länge in Richtung Fahrzeugfront verlaufen und ebenfalls auf der Tragevorrichtung 7 bzw. der Bodenplatte 2 befestigt sind. Dabei wird jeder Bolzen 10 mit einer Sollbruchstelle 10a ausgeführt, so dass beim Überschreiten einer gewissen, von außen auf die Sicherheitskapsel 1 wirkenden Kraft die Verbindung zwischen jedem Bolzen 10 und den Führungsschienen 9 durch Bruch aufgehoben wird und entweder ein seitliches Verschieben der Sicherheitskapsel 1, durch ein Gleiten der Gelenke 8a und ein Gleiten der Bolzenstümpfe in den Führungsschienen 9, oder ein Ausschwingen der Sicherheitskapsel 1, durch ein Verschwenken über die Gelenke 8a und, in der ersten Phase des Ausschwingens, eine Längsführung der Bolzenstümpfe in den Längsschienen 9a erfolgen.

Die Träger 8c können ferner höhenverstellbar ausgestaltet werden, um die von der Kapsel 1 auf die Bodenplatte 2 wirkende Kraft in einem gewissen Bereich verändern zu können, wodurch auch eine Änderung der "Auslösekraft" der Sicherheitskapsel 1 erfolgt.

Beim Aufbau der Sicherheitskapsel 1 und den dazu erforderlichen Karosserieänderungen wird der Schwerpunkt auf eine möglichst verstärkte und daher steife Ausführung der Sicherheitskapsel 1 gelegt. Es sind daher auch die Windschutzscheibe, die Türen und sämtliche andere Teile des Fahrzeuges, die Teil der Sicherheitskapsel 1 sind, entsprechend auszulegen. Auch der Fahrzeugrahmen, der nicht Teil der Sicherheitskapsel 1 ist, wird steif ausgeführt.

Dabei ist selbstverständlich sicherzustellen, dass die vom Motorenraum in den Bereich der Sicherheitskapsel 1 hinein ragenden und für die normale Funktion des Fahrzeuges notwendige Bauteile sich bei entsprechend hohen Kräften, wie sie etwa bei einem Frontalzusammenstoß auftreten, durch das Vorsehen von Sollbruchstellen bzw. durch eine andere gleich wirkende Ausführung von der Sicherheitskapsel 1 lösen und ein Ausschwingen bzw. Gleiten derselben nicht behindern.

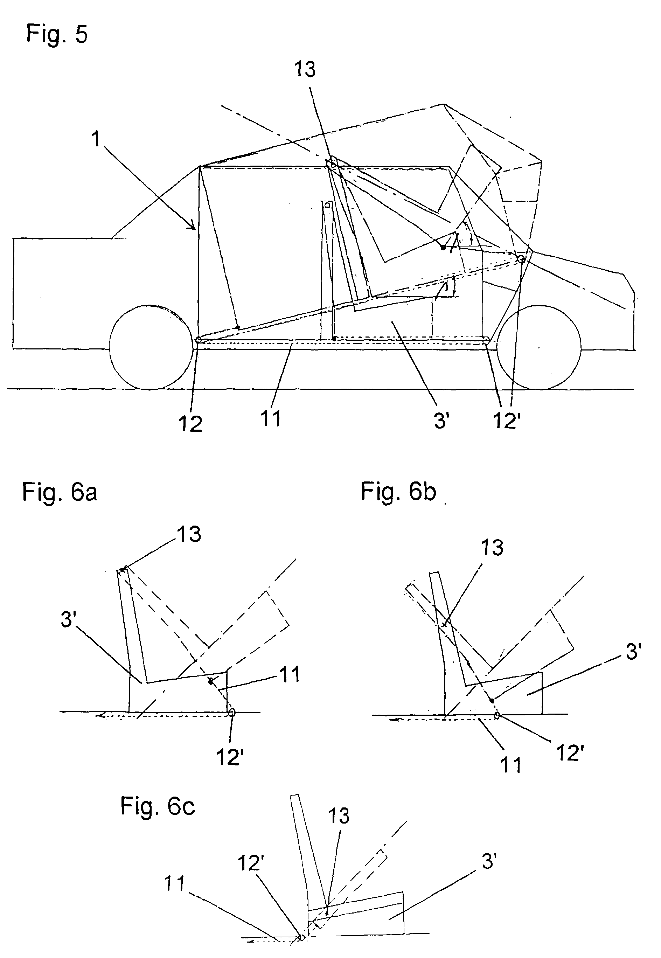

Bei der in Fig. 5 dargestellten Ausführungsvariante wird die bei einem Frontalanprall entstehende Trägheitskraft nicht nur für ein Einleiten der Ausschwingbewegung der Sicherheitskapsel 1, sondern auch für eine gesonderte Verschwenkung der Fahrzeugsitze, wobei in Fig. 5 nur die vordere Sitzreihe 3' schematisch dargestellt ist, innerhalb der Kapsel 1 um eine horizontale Achse eingesetzt. Diese Verschwenkung soll die Sitze in eine Position bringen, in der die Belastungen auf den Benutzer im Wesentlichen von der Sitzfläche aufgefangen werden, was die Gurtkraft reduziert. Dabei wird vorgesehen, zumindest die Sitze einer der Sitzreihen über eine gesonderte Schwenkbewegung in eine solche Position zu bringen.

Dazu werden für diese Sitzreihe zumindest zwei besonders befestigte und geführte Seile 11 vorgesehen. In Fig. 5 ist nur eines dieser Seile 11 dargestellt. Durch die Anordnung und Führung jedes Seiles 11 wird eine Verbindung zwischen dem hinteren, unteren Teil der Sicherheitskapsel 1 und der betreffenden Sitzreihe 3' hergestellt, wodurch die Sitzreihe 3' zwangsweise und zusätzlich zur Ausschwingbewegung der Sicherheitskapsel 1 verschwenkt. Das eine Ende des Seiles 11 ist am hinteren, unteren Teil der Sicherheitskapsel 1 befestigt. Hier ist auch eine erste, an der Bodenplatte 2 und somit fahrzeugfest angeordnete Umlenkrolle 12 vorgesehen. Von dort wird das Seil 11 nach vorne geführt und anschließend über eine zweite, am vorderen Ende der Sicherheitskapsel 1 angeordnete Umlenkrolle 12' geführt und zur Sitzreihe 3' zurückgeführt. Der bevorzugte Befestigungspunkt an der Sitzreihe 3' befindet sich dabei im Bereich des rückwärtigen, unteren Bereiches der Sitze.

Die Sitzreihe 3' selbst ist, wie bereits erwähnt, an der Sicherheitskapsel 1 schwenkbar gelagert, was in Fig. 5 durch die Achse 13 angedeutet ist. Bei einem Ausschwenken bzw. einer Ausschwingbewegung der Sicherheitskapsel 1 wird in Folge der Umlenkung der Seile 11 über die Umlenkrollen 12, 12' und der gewählten Befestigungspunkte für die Seile 11 zwangsweise eine gesonderte Schwenkbewegung der Sitzreihe 3' um die Achse 13 verursacht.

Bei dem in Fig. 5 dargestellten Ausführungsbeispiel ist dabei die Achse 13 im oberen Endbereiches der Sitzlehnen der Sitzreihe 3' vorgesehen. Dadurch wird jeder Sitz dieser Reihe sehr schnell in eine sehr günstige Position bezüglich der Sitzfläche des im Sitz befindlichen Passagiers bewegt. In Fig. 5 sind dabei zwei unterschiedliche Lagen der Sitzreihe 3' bei einer Schwenkbewegung der Sicherheitskapsel 1 dargestellt. Jene Lage, wo die Sitzreihe 3' gegenüber der Horizontalen einen Winkel ß, der etwa 15° beträgt, einnimmt, entspricht einer Lage der Sitzreihe 3', wenn keine gesonderte Verschwenkung der Sitze und somit auch keine Seilverbindungen vorgesehen sind. Die zweite Lage der Sitzreihe 3', wo diese einen Winkel ß', der hier 54° beträgt, gegenüber der Horizontalen einnimmt, ist jene, wenn die beschriebene Seilverbindung und die gesonderte schwenkbare Lagerung der Sitze bzw. der betreffenden Sitzreihe3' bei einem Ausschwingen der Sicherheitskapsel 1 in Wirkung treten. Die Sitze werden somit sehr rasch in eine sehr günstige und für den den jeweiligen Sitz benützende Person sehr sichere Lage bewegt.

Wie bereits erwähnt, sollte vorgesehen werden, die zusätzliche Schwenkbewegung jeweils für alle Vordersitze und alle Hintersitze gleichzeitig durchführen zu können.

Bei einem Frontalzusammenstoß werden die Kräfte des anderen Fahrzeuges oder des festen Hindernisses zuerst durch die Grundplatte 8a des Schlittens 8 der Sicherheitskapsel 1 abgelenkt und in weiterer Folge durch die verschwenkten und somit gehobenen Sitze von den gefährdeten Körperteilen der im jeweiligen Sitz befindlichen Person weitgehend abgehalten.

Die Führung jedes Seiles 11 kann nun in der Sicherheitskapsel 1 von hinten kommend unter den Sitzreihen bis zur vorderen Umlenkrolle 12' erfolgen oder auch außerhalb der Sicherheitskapsel 1 durchgeführt werden.

Abhängig vom jeweiligen Raumangebot innerhalb der Sicherheitskapsel 1 können unterschiedliche Lagen für die Schwenkachse 13 der Sitzreihen und der Befestigungspunkte für die Seile 11 gewählt werden. Die Figuren 6a bis 6c zeigen schematisch einige dieser möglichen Lagen, wobei die verschwenkten Positionen strichliert eingezeichnet sind.

Dabei erfordert einen größeren Raumbedarf eine Lage der Schwenkachse 13, wie sie in Fig. 6a dargestellt ist, demnach im Bereich des oberen Endes der Sitzlehnen. Die Seilenden sind im vorderen Bereich und unterhalb der Sitzflächen der Sitzreihe 3' befestigt. Dies entspricht der Lage der Schwenkachse und des Befestigungspunktes in Fig. 5. Einen geringen Raumbedarf hat eine Lage der Schwenkachse 13 im mittleren Bereich der Sitzlehnen, die Seilbefestigungen sind an den unteren, hinteren Enden der Sitze. Dies ist auch die bevorzugte Lage der Schwenkachse 13 für einen Sitz in der hinteren Sitzreihe.

Eine weitere, mögliche Anordnung der Schwenkachse 13 zeigt Fig. 6c, wo sich die Schwenkachse 13 knapp unterhalb jenes Bereiches befindet, wo Lehne und Bank zusammentreffen. Etwas weiter nach hinten und unten versetzt befinden sich die Befestigungsstellen für die Seile 11. Bei dieser Ausführungsform ist ferner dargestellt, dass die Sitzlehnen nicht mitverschwenken. Es wird vom Raumangebot innerhalb des Fahrzeuges abhängen, ob auch die Sitzlehnen verschwenkt werden.

Die Sicherheitskapsel kann durch weitere, zusätzliche Maßnahmen noch an passiver Sicherheit für die Passagiere gewinnen. So ist es eine Selbstverständlichkeit, dass für sämtliche Passagiere Sicherheitsgurte vorgesehen sind. Es wäre weiters günstig, wenn die Sitze selbst als Schalensitze ausgeführt werden und eine verstärkte Türkonstruktion für die Teile der Sicherheitskapsel bildenden Türen gewählt wird. Aus diesem Grund ist es auch von Vorteil, für das Fahrzeug ein möglichst steifes Fahrgestell vorzusehen, um im Falle eines Frontalzusammenstoßes ein entsprechendes Ablenken des kollidierenden Fahrzeuges zu bewirken. Als weitere Sicherheits- und Schutzmaßnahmen kommen Warnsysteme, beispielsweise Abstandsmessungssysteme unter Verwendung von Radar, entsprechende Sensoren, die schon ein vorzeitiges Ausschwingen der Sicherheitskapsel bewirken können, und weitere Vorrichtungen, die die betreffende Bewegung der Sicherheitskapsel unterstützen, in Frage.

Um das seitliche Verschieben nicht durch die Dimension der Breite des Fahrzeuges zu begrenzen, kann vorgesehen werden, die Schwenkachse der Sicherheitskapsel als Teleskopstange mit Verschiebemuffen auszuführen. Um das seitliche Verschieben der Sicherheitskapsel zu erleichtern, kann es auch von Vorteil sein, die seitlichen Rahmenteile für die Schwenkachse nach vorne gekröpft auszubilden.

Die vorrangige Bedeutung der Sicherheitskapsel liegt in der erzielbaren Vermeidung von schweren körperlichen Verletzungen der Fahrzeugpassagiere. Das Vorsehen einer Sicherheitskapsel hat jedoch auch noch andere Vorteile. So kann sich ein etwaiger Schaden, etwa bei einem Frontalzusammenstoß, auf die Frontpartie des Autos beschränken, da die Sicherheitskapsel mit allen Einbauten voraussichtlich weitgehend unversehrt bleiben kann. Neben ihren Funktionen im Falle eines Frontalzusammenstoßes oder eines Seitenaufpralles bietet die Sicherheitskapsel auch einen gewissen Schutz bei Auffahrunfällen von rückwärts, da sie entsprechend steif ausgeführt ist und auch nach vorne ausweichen kann.

Alternativ zu den dargestellten und beschriebenen Ausführungsformen kann die Sicherheitskapsel auch an einer Tragevorrichtung gelagert werden, die sich in der Fahrzeugmitte befindet. Diese Maßnahme wäre jedoch mit etwas ungünstigeren kinematischen Bedingungen verbunden. Darüber hinaus wäre es grundsätzlich auch möglich, zwei getrennte Sicherheitskapseln, je eine für die vordere und je eine für die hintere Sitzreihe, jeweils mit eigener Tragevorrichtung, vorzusehen. Dies bedingt eine etwas ungünstigere Relativbewegung zwischen den beiden Sicherheitskapseln und auch einen aufwendigeren Aufbau.

## Patentansprüche

1. Sicherheitseinrichtung für Kraftfahrzeuge mit einer insbesondere sämtliche für die Fahrzeuginsassen vorgesehene Sitze aufnehmenden Sicherheitskapsel, die unter Ausnützung ihrer Massenträgheit bei einem zumindest im Wesentlichen frontal erfolgenden Zusammenstoß um eine in Fahrzeugquerrichtung verlaufende Achse schwenkbar und vorzugsweise bei einem Seitenaufprall in seitlicher Richtung gleitbeweglich verschiebbar ist, dadurch gekennzeichnet, dass die Sicherheitskapsel (1) an einer fahrzeugfesten Achse (6) derart schwenkbar angeordnet ist, dass sie bei einem Frontalzusammenstoß mit einem Hindernis gegenüber diesem oder über dieses ausschwingt.

2. Sicherheitseinrichtung nach Anspruch 1, dadurch gekennzeichnet, dass die Sicherheitskapsel (1) an ihrem rückwärtigen und oberen Bereich an der fahrzeugfesten Schwenkachse (6) gelagert ist, welche vorzugsweise auch zum gleitbeweglichen Verschieben der Sicherheitskapsel (1) bei einem Seitenaufprall vorgesehen ist.

3. Sicherheitseinrichtung nach einem der Ansprüche 1 oder 2, dadurch gekennzeichnet, dass die Sicherheitskapsel (1) ein vormontierter Fahrzeugteil mit Fahrzeugtüren, insbesondere sämtlichen Sitzen, mit Windschutzscheibe und Fahrzeugdach, jeweils in dem dem betreffenden Fahrzeug angepassten Design, ist.

4. Sicherheitseinrichtung nach einem der Ansprüche 1 bis 3, dadurch gekennzeichnet, dass die Sicherheitskapsel (1) mittels Schwing- und gleichzeitig Schiebegelenken (8b) an der insbesondere mit der Bodenplatte (2) des Fahrzeuges fest in Verbindung stehenden Achse (6) gelagert ist, wobei die Schwing- und Schiebegelenke (8b) vorzugsweise Teile eines Schlittens (8) der Sicherheitskapsel (1) sind.

5. Sicherheitseinrichtung nach einem der Ansprüche 1 bis 4, dadurch gekennzeichnet, dass eine mit der Bodenplatte (2) des Fahrzeuges verbundene Tragevorrichtung (7) vorgesehen ist, die Rahmenteile (7b) aufweist, an der eine die Schwenkachse (6) bildende Stange oder dergleichen angeordnet ist.

6. Sicherheitseinrichtung nach einem der Ansprüche 1 bis 5, dadurch gekennzeichnet, dass zumindest eine, insbesondere zwei, mit der Bodenplatte (2) des Fahrzeuges fest verbundene, quer verlaufende Führungsschiene(n) (9) vorgesehen ist bzw. sind.

7. Sicherheitseinrichtung nach einem der Ansprüche 1 bis 6, dadurch gekennzeichnet, dass der Schlitten (8) mittels Scherbolzen (10) oder dergleichen, die die Führungsschiene (9) vorzugsweise an Kreuzungsstellen mit Längsschienen (9a) durchsetzen, mit der Tragevorrichtung (7) bzw. der Bodenplatte (2) des Fahrzeuges verbunden ist.

8. Sicherheitseinrichtung nach einem der Ansprüche 1 bis 7, dadurch gekennzeichnet, dass bei einem Ausschwingen der Sicherheitskapsel (1) zumindest die Sitze einer Sitzreihe (3') um eine an der Sicherheitskapsel (1) vorgesehenen Achse (13) um einen größeren Winkel schwenken als die Sicherheitskapsel (1).

9. Sicherheitseinrichtung nach Anspruch 8, dadurch gekennzeichnet, dass die zusätzliche Verschwenkung der Sitze der Sitzreihe (3') über zumindest ein Seil (11) oder dergleichen durchgeführt wird, welches vorzugsweise mit seinem einen Ende an der Sicherheitskapsel (1) und mit seinem anderen Ende am Sitz bzw. der Sitzreihe (3') befestigt ist und über zwei Umlenkrollen (12, 12'), von welchen die eine fahrzeugfest und die andere an der Kapsel (1) befestigt ist, geführt ist.

10. Sicherheitseinrichtung nach Anspruch 8 oder 9, dadurch gekennzeichnet, dass die Schwenkachse (13) für jeden Sitz bzw. jede Sitzreihe (3') entweder im Bereich des oberen Endbereiches oder im mittleren Bereich der Sitzlehne(n) der Sitzlehne(n) oder unterhalb der Sitzlehne(n) und der Sitzfläche(n) verläuft.

11. Fahrzeug, insbesondere Personenkraftwagen, welches mit einer Sicherheitseinrichtung nach zumindest einem der Ansprüche 1 bis 10 ausgestattet ist.
